# EUROPÄISCHE PATENTSCHRIFT

(11) **EP 1 400 065 B1**
(45) Veröffentlichungstag und Bekanntmachung des Hinweises auf die Patenterteilung: **13.02.2008**
(21) Anmeldenummer: 02742770.7
(22) Anmeldetag: 22.05.2002
(51) Int. Cl.: H04L 12/40, B60R 16/02

(54) **BUSSYSTEM IN EINEM FAHRZEUG**
BUSSYSTEM IN A VEHICLE
SYSTÈME DE BUS DANS UN VEHICULE

(30) Priorität: 06.06.2001 DE 10127327
(43) Veröffentlichungstag der Anmeldung: 24.03.2004
(73) Patentinhaber: ROBERT BOSCH GMBH, 70442 Stuttgart (DE)
(72) Erfinder: RUNGE, Holger, 31135 Hildesheim (DE); BAUER, Sven, 31134 Hildesheim (DE); SIEPEN, Peter, 46049 Oberhausen (DE); WOLLBORN, Michael, 30455 Hannover (DE)
(86) Internationale Anmeldenummer: PCT/DE2002/001839
(87) Internationale Veröffentlichungsnummer: WO 2002/100045

(56) Entgegenhaltungen:
- EP-A- 1 068 983
- WO-A-00/77621
- WO-A-99/48021
- DE-A- 19 853 665
- DE-C- 19 600 644
- RABEL M ET AL: "INTEGRATING IEEE 1394 AS INFOTAINMENT BACKBONE INTO THE AUTOMOTIVE ENVIRONMENT" VTC 2001 SPRING. IEEE VTS 53RD. VEHICULAR TECHNOLOGY CONFERENCE. RHODES, GREECE, MAY 6 - 9, 2001, IEEE VEHICULAR TECHNOLGY CONFERENCE, NEW YORK, NY: IEEE, US, Bd. 3 OF 4. CONF. 53, 6. Mai 2001 (2001-05-06), Seiten 2026-2031, XP001082499 ISBN: 0-7803-6728-6

## Beschreibung

### Stand der Technik

Die Erfindung geht aus von einem Bussystem nach der Gattung des unabhängigen Patentanspruchs.

Es ist bereits bekannt, in einem Fahrzeug Komponenten über einen Bus zu verbinden. Die Komponenten sind dann Busstationen. Beispiele für solche Busse sind der CAN-Bus und der Firewire-Bus.

Aus der EP 1 068 983 A2 ist eine Fahrzeugkommunikationsanlage mit einer Mehrzahl von Komponenten bekannt, wobei die einzelnen Komponenten an verschiedenen Stellen im Fahrzeug positioniert sind. Die einzelnen Komponenten der Fahrzeugkommunikationsanlage sind über einen Bus miteinander verbunden. Zur Verwaltung des Busses ist eine Mikrocomputereinheit vorgesehen, welche in einem Bedienteil integriert ist. Das Bedienteil weist elektrische und mechanische Trennstellen auf und ist im Armaturenbrett des Fahrzeugs angeordnet. Über eine Verriegelung/Entriegelung ist es abnehmbar. Die Mikrocomputereinheit steuert die Funktion des Busses.

### Vorteile der Erfindung

Die erfindungsgemäße Busstation mit den Merkmalen des unabhängigen Patentanspruchs hat demgegenüber den Vorteil, dass mit der erfindungsgemäßen Busstation ein Bussystem nach dem Baukastenprinzip schnell und flexibel aufbaubar ist, so dass aktuelle Techniken und Standards der Unterhaltungsindustrie bzw. der Kfz-Industrie zügig übernommen werden können. Durch die Aufteilung der Ressourcen auf verschiedene Busstationen ist es möglich, dass die Dienste unabhängig von dem physikalischen Busmedium bzw. der Unterstützung unterschiedlicher Bussysteme sind. Außerdem ist durch die verteilte Nutzung der Ressourcen eine Unabhängigkeit von der gegebenen Hardware von der jeweiligen

Busstation, wo die Applikation abläuft, gegeben. Darüber hinaus ist es von Vorteil, dass die erfindungsgemäße Busstation eine einfache Aufrüstung durch Hinzufügen und/oder Tausch von Teilsystemen auch im Feld ermöglicht. Weiterhin ist es von Vorteil, dass das Basismodul die Kommunikation mit dem ersten Bus, also dem Bus, der die Busstationen verbindet, regelt, so dass die einzelnen Geräte, die als Erweiterungsmodule an den zweiten Bus angeschlossen werden wie ein Grafik/Videosystem, ein Audiosystem oder Kommunikationssysteme, keine Schnittstelle und keine Komminikationssoftware für diesen ersten Bus aufweisen müssen. Dies vereinfacht die Herstellung und Bereitstellung solcher Erweiterungsmodule.

Aufgrund der Modularität des vorgeschlagenen Systems auf Hardware und Softwareebene ist es auch möglich, Komponenten weitgehend wiederzuverwenden. Die Flexibilität der Busstationen ermöglicht es, dass ein feststehendes Bussystem verwendet werden kann, an das je nach Anfrage unterschiedliche Komponenten hinzugefügt werden können. Dies verringert den Aufwand zur Erstellung eines konkreten Systems (Konfektionierung eines Systems) erheblich. Die Ergänzung von Busstationen sowohl auf Hardware- als auch auf Softwareebene ist durch die vorgeschlagene Busstation besonders einfach. Insbesondere können somit Neuentwicklungen aus dem Entertainmentsektor besonders schnell in solche Systeme integriert werden. Auch ein Update von Software der einzelnen Erweiterungsmodule bzw. des Basismoduls ist durch die Modularität'besonders einfach. Softwaremodule sowohl der Driver- und Middleware als auch der Applikationsebene können durch neue, überarbeitete und ergänzte Versionen ausgetauscht werden, beispielsweise auch über Funk über eine Sende-/Empfangsstation. Durch die Modularität des Systems ist die Updatefähigkeit auch für die einzelnen Hardwarebaugruppen grundsätzlich gewährleistet.

Durch die in den abhängigen Ansprüchen aufgeführten Maßnahmen und Weiterbildungen sind vorteilhafte Verbesserungen der im unabhängigen Patentanspruch angegebenen Busstation möglich.

Besonders vorteilhaft ist, dass das Basismodul als Busmaster für den zweiten Bus ausgebildet ist. Es können daneben auch noch weitere Busse vorhanden sein, für die das Basismodul auch als Busmaster wirken kann. Die einzelnen Erweiterungsmodule sind dann Slaves, die vom Busmaster gesteuert werden. Dies ist eine besonders einfache Konzeption für einen Bus. Auch der erste Bus, der globale Fahrzeugbus kann nach dem Master-Slave oder nach dem Multimaster-Prinzip aufgebaut sein.

Darüber hinaus ist es von Vorteil, dass das Basismodul die Kommunikation der Erweiterungsmodule, die an seinem zweiten Bus angeschlossen sind, mit anderen Busstationen steuern kann. Erweiterungsmodule müssen somit nicht die Mechanismen zum Datenaustausch über den globalen Fahrzeugbus implementieren. Diese Eigenschaft erleichtert auch den Aufbau von Erweiterungsmodulen mit handelsüblichen Bausteinen, welche nicht speziell für die vorgeschlagene Busstation entwickelt wurden.

Es können auch sicherheitsrelevante Erweiterungsmodule vorgesehen sein, auf die ein nicht vorgesehener und nicht autorisierter Zugriff verhindert wird, so dass diese Erweiterungsmodule jederzeit für ihre sicherheitskritischen Anwendungen zur Verfügung stehen und mißbräuchliche Nutzung verhindert wird. Die Zugriffkontrolle wird-durch das Basismodul der Busstation implementiert.

Weiterhin ist es von Vorteil, dass wenigstens ein Erweiterungsmodul als Sende-/Empfangsstation ausgebildet sein kann, über das ein Zugriff von außerhalb des Fahrzeugs auf die Busstation möglich ist. Damit wird beispielsweise Fernwartung oder Fernupdate der einzelnen Erweiterungsmodule im Hinblick auf die Software ermöglicht. Weiterhin ermöglicht eine Sende-/Empfangsstation das Laden von durch die Fahrzeuginsassen gewünschten Daten wie Musik, Multimediadaten, Verkehrsinformationen, Fahrtroutendaten oder anderen Informationen.

Weiterhin ist es von Vorteil, dass eine Applikation wie zum Beispiel die DVD-Wiedergabe auf die Resourcen aller Busstationen zugreifen kann. Die Gesamtheit der Module einer Busstation muß nicht ein abgeschlossenes Gerät im herkömmlichen Sinne, wie etwa ein DVD-Abspielgerät, bilden. Andererseits kann eine zweite Applikation dieselben Resourcen nutzen. Das DVD-Laufwerk beispielsweise kann auch zum Lesen von Kartendaten für eine Navigations-Applikation genutzt werden. Falls mehrere gleichwertige Resourcen von den Busstationen des Systems zur Verfügung gestellt werden, kann die Auswahl einer Resource in Anhängigkeit von Buslast und Bandbreitenbedarf getroffen werden.

Schließlich ist es auch von Vorteil, dass ein Bus zum Anschluß der Busstationen vorhanden ist und ein entsprechendes Basismodul, das als Schnittstelle zwischen dem ersten und dem zweiten Bus dient. Weiterhin ist dieses Basismodul wie oben dargestellt als Busmaster für den zweiten Bus ausgebildet.

### Zeichnung

Ausführungsbeispiele der Erfindung sind in der Zeichnung dargestellt und werden in der nachfolgenden Beschreibung näher erläutert. Es zeigt Figur 1 ein Blockschaltbild einer erfindungsgemäßen Busstation, Figur 2 ein Blockschaltbild eines erfindungsgemäßen Busses, Figur 3 ein Ablaufdiagramm, das die Nutzung von verteilten Ressourcen durch eine Software-Applikation darstellt.

### Beschreibung

Zunehmend werden Infotainmentkomponenten wie ein Autoradio, Navigation, Mobiltelefon, Speicherlaufwerke, wie eine CD-ROM in Kraftfahrzeuge zur Nutzung für die Fahrzeuginsassen eingebaut. Da sich die Entwicklung von solchen elektronischen Komponenten immer weiter beschleunigt und die Zahl dieser elektronischen Komponenten zunimmt, sind einerseits die Vernetzung dieser Komponenten und andererseits eine leichte Erweiterung bzw. Austauschbarkeit notwendig. Diese Erweiterung und Austauschbarkeit beziehen sich dabei sowohl auf die Hardware als auch auf die Software. Es ist dabei möglich, dass beispielsweise die Funktionalität eines Geräts im Wesentlichen durch die Software bestimmt wird und die Hardware gleichbleiben kann.

Erfindungsgemäß wird nun eine Busstation vorgeschlagen, die eine modulare verteilte Plattform für Multimedia-, Navigations-, Kommunikations- und Telematiksysteme bietet. Dabei ist insbesondere die Trennung der erfindungsgemäßen Busstation in ein Basismodul und Erweiterungsmodule entscheidend. Dies ermöglicht nach dem Baukastenprinzip einen schnellen und flexiblen Aufbau. Außerdem können damit zügig aktuelle Techniken und Standards der Unterhaltungsindustrie übernommen werden. Dabei werden die Busstationen an einen globalen Fahrzeugbus angeschlossen und verfügen selbst jeweils über einen eigenen Bus, an den die einzelnen Erweiterungsmodule angeschlossen sind.

Unter dem Begriff Dienst wird im Folgenden eine Applikation verstanden, die entweder automatisch oder durch einen Nutzer aufgerufen wird. Ein solcher Dienst wäre beispielsweise das Abspielen eines Videoclips, wobei die erfindungsgemäße Busstation hier Ressourcen wie zum Beispiel Rechenkapazität, Datenspeicher, Display, Audio-Wiedergabesystem zur Dekodierung der Bilddateien von verschiedenen Busstationen nutzen kann.

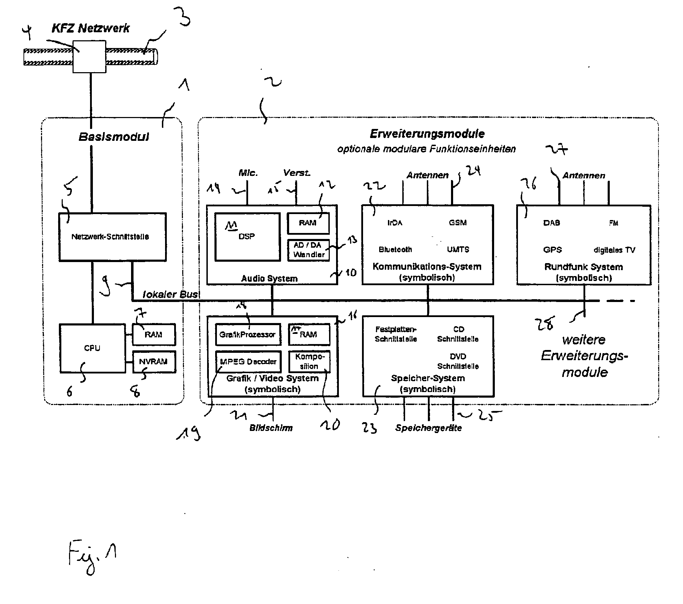

Figur 1 zeigt als Blockschaltbild die erfindungsgemäße Busstation. Die erfindungsgemäße Busstation weist ein Basismodul 1 und Erweiterungsmodule 2 auf. Die Erweiterungsmodule 2 sind modulare Funktionseinheiten wie ein Audiosystem 10, ein Kommunikationssystem 22, ein Rundfunksystem 26, ein Speichersystem 23 und ein Grafik- und Videosystem 16. Es sind hier jedoch weitere Erweiterungsmodule anschließbar. Diese Erweiterungsmodule werden an einen lokalen Bus 9 der Busstation angeschlossen. Das Basismodul 1 weist eine Netzwerkschnittstelle 5 auf, die einerseits eine Verbindung zu einem Kfz-Bus 3, dem globalen Fahrzeugbus, herstellt, der über eine Schnittstelle 4 mit der Busstation verbunden ist und andererseits den lokalen Bus 9 verbindet sowie die im Basismodul vorhandenen Komponenten, also eine CPU (Central Processing Unit) 6 und Speicher, ein RAM 7 und ein nicht flüchtiger Speicher 8. Als nicht flüchtiger Speicher 8 kann ein sogenanntes NV (non volatile) RAM verwendet werden.

Das Basismodul 1 sorgt nun dafür, dass Daten, die von den Erweiterungsmodulen 10, 16, 22, 23 und 26 über den lokalen Bus 9 zu anderen Busstationen übertragen werden sollen, über den Bus 3 zu diesen Busstationen überträgt. Das Basismodul 1 stellt die Software zur Verfügung, so dass die Erweiterungsmodule 10, 16, 22, 23 und 26 auf die Ressourcen, also Hardware- und Softwarekomponenten anderer Busstationen zugreifen können. Dabei werden sowohl die Ressourcen der Basismodule und der Erweiterungsmodule genutzt. Weiterhin sorgt das Basismodul 1 dafür, dass die Erweiterungsmodule auch Ressourcen gegenseitig über den Bus 9 nutzen können. Sicherheitsrelevante Erweiterungsmodule werden durch Software von dem Basismodul 1 durch einen fremden Zugriff besonders geschützt.

Das Audiosystem 10 weist einen digitalen Signalprozessor 11, einen Speicher 12 und AD (Analog-Digital)- und DA (Digital-Analog) -Wandler 13 auf. Zwei Schnittstellen 14 und 15 führen einerseits zu einem Verstärker und andererseits zu einem Mikrophon. Das Grafik- und Videosystem 16 weist einen Grafikprozessor 18, einen MPEG/H26x-Dekoder 19, einen Speicher 17 und einen Kompositor 20 auf, wobei der Kompositor 20 die Zusammenführung von Grafik- und Videodaten aus verschiedenen Quellen ermöglicht.

Das Kommunikationssystem 22 unterstützt hier mehrere Kommunikationsprotokolle wie UMTS, GSM, Bluetooth und IrDA. Alternativ ist es möglich, dass das Kommunikationssystem 22 nur einen, weniger oder mehr Standards als angegeben unterstützt. Das Kommunikationssystem 22 weist Anschlüsse zu Antennen 24 auf. Das Speichersystem 23 verfügt über Schnittstellen zu Festplatten, CD-ROMS und DVDs über die Anschlüsse 25. Das Rundfunksystem 26 nutzt hier GPS zur Ortung, um beispielsweise ortungsrelevante Daten auszugeben, unterstützt digitalen Rundfunk, beispielsweise DVB (Digital Video Broadcästing), FM und DAB (Digital Audio Broadcasting). Das Rundfunksystem 26 weist Anschlüsse 27 zu Antennen auf. Weitere Erweiterungsmodule 28 sind hier anschließbar. Dazu gehören beispielsweise Navigationsgeräte.

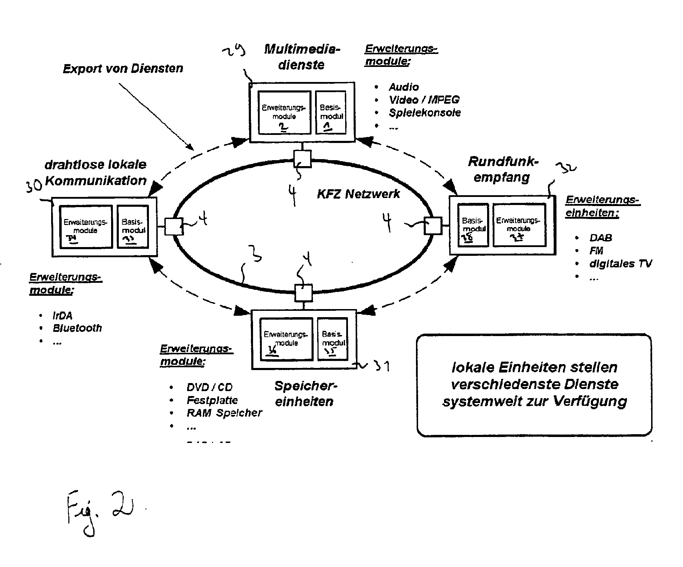

Figur 2 zeigt die Konfiguration des gesamten Systems. An den Kfz-Bus 3, einen multimediatauglichen Bis wie beispielsweise MOST oder IEEE 1394-B, der ein Multimasterbus ist, sind über die Anschlüsse die Busstationen 29, 30, 31 und 32 angeschlossen. Die Busstation 29 weist das Basismodul 1 und die Erweiterungsmodule 2 auf. Hier werden Erweiterungsmodule für Audio, Video, MPEG und eine Spielekonsole unterstützt. Die Busstation 30 ist für eine drahtlose Kommunikation mit Gegenstellen innerhalb und außerhalb des Fahrzeugs zuständig. Sie verfügt über das Basismodul 33 und die Erweiterungsmodule 34. Zu den Erweiterungsmodulen zählen IrDA, Bluetooth, GSM, UMTS, GPRS usw.

Die ausstatten 31 verfügt über das Basismodul. 35 und die Erweiterungsmodule 36. Hier zählen zu den Erweiterungsmodulen DVD, CD, Festplatte und andere Speicher. Die Busstation 32 schließlich ist für den Rundfunkempfang zuständig. Sie-verfugt über das Basismodul 38 und die Erweiterungsmodule 37. Zu den Erweiterungsmodulen zählen DAB, FM, digitales Fernsehen und andere Rundfunkstandards. Ein Vergleich von Figur 1 und Figur 2 zeigt, dass in einer Busstation verschiedene Funktionalitäten über den lokalen Bus 9 miteinander verbindbar sind, es ist jedoch weiterhin möglich, die Erweiterungsmodule der Anwendung nach auf verschiedene Busstationen zu verteilen. Über den Bus 3 ist es nun möglich, verschiedene Dienste und Ressourcen zwischen den Busstationen 29 bis 32 auszutauschen. Dies ist durch die Doppelpfeile mit der gestrichelten Linie dargestellt. Durch Hinzufügen von weiteren Busstationen können weitere Module hinzugefügt werden, die die Implementierung zusätzlicher Funktionalitäten ermöglichen können. Ein Beispiel hierfür ist die Erweiterung um drahtlose Kommunikationsschnittstellen, wodurch die Verwendung eines Organizers oder Notebooks ermöglicht wird.

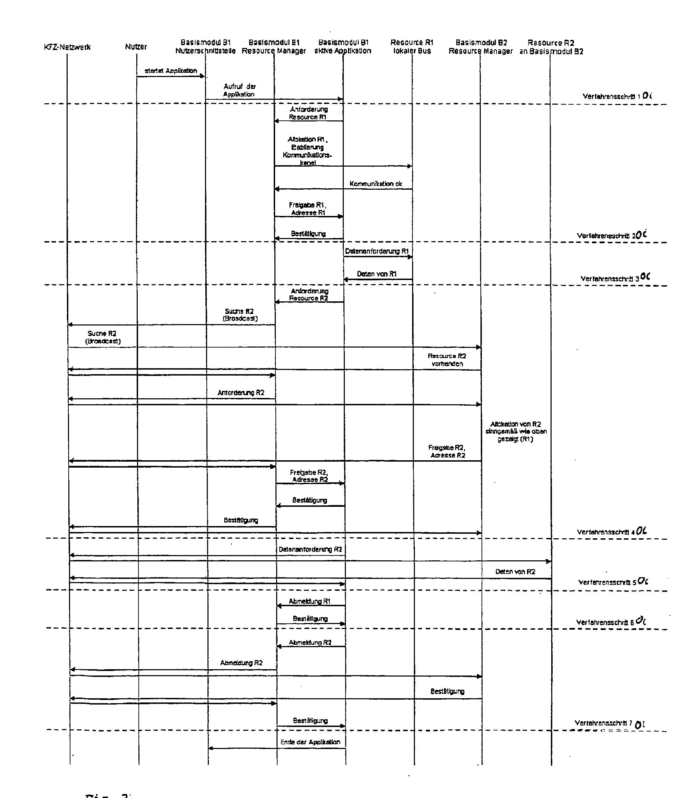

Figur 3 zeigt als Ablaufdiagramm die Nutzung von Resourcen durch eine Applikation. Jedes Basismodul stellt grundlegende Dienste zur Verfügung, die durch eine entsprechende Programmschnittstelle von allen Applikationen genutzt werden können. Zu diesen Diensten gehört ein Messaging Service, welcher Funktionen zur Kommunikation mit anderen Busstationen zur Verfügung stellt, und ein Resource Manager, der die Verwaltung der Erweiterungsmodule am lokalen Bus der Busstation implementiert.

In Verfahrensschritt 100 ruft der Benutzer über die Nutzerschnittstelle eine Applikation auf. Die gestartete Applikation wird in Busstation B1 ausgeführt, sie benötigt zwei Dienste S1 und S2. In Verfahrensschritt 200 wird zunächst Dienst S1 angesprochen. Hierzu richtet die Applikation eine Anfrage nach dem Dienst S1 an den Resource Manager der Busstation. Der Resource Manager verwaltet die Resource R1, die den Dienst S1 zur Verfügung stellen kann. Der Resource Manager gibt R1 zur Benutzung durch die Applikation frei, etabliert einen Kommunikationskanal zwischen R1 und der Applikation und teilt der Applikation eine Adresse zum Zugriff auf R1 mit.

In Verfahrensschritt 300 nutzt die Applikation die Resource R1, wobei die Kommunikation ohne Beteiligung der Resource Managers abläuft.

In Verfahrensschritt 400 spricht die Applikation den Dienst S2 an. Äquivalent zu Verfahrensschritt 200 wird der Resource Manager der Busstation befragt. Da die Busstation jedoch über keine Resource verfügt, die den Dienst S2 implementiert, richtet der Resource Manager eine Anfrage an die Resource Manager aller anderen Busstationen, mit denen über das Kfz-Bussystem kommuniziert werden kann. Der Resource Manager der Busstation B2 kann den Dienst zur Verfügung stellen und bietet ihn an B1 an. B1 fordert den Dienst von B2 an. Der Resource Manager an B2 allokiert die Resource R2 sinngleich zu Verfahrensschritt 200, übergibt Zugriffsrechte und Adresse an den Resource Manager an B1, welcher sie an die Applikation weitergibt.

In Verfahrensschritt 500 nutzt die Applikation die Resource R2. Zur Kommunikation zwischen Applikation und Resource wird keiner der Resource Manager benötigt. Da die Kommunikation über Funktionen des Messaging Services implementiert ist, besteht für die Applikation kein Unterschied zwischen einer an B1 lokal verfügbaren Resource und einer Resource einer anderen Busstation, die über das Kfz-Netzwerk angesprochen wird.

In Verfahrensschritt 600 wird die Resource R1 welche nicht mehr von der Applikation benötigt wird, abgemeldet. Dies geschieht-durch Kontaktierung des Resource Managers, welcher den Kommunikationskanal zwischen R1 und Applikation abbaut. Verfahrensschritt 700 zeigt entsprechend die Abmeldung der Resource R2 durch die Applikation, am Resource Manager der Busstation B1. Der Resource Manager an B1 kontaktiert den Resource Manager der Busstation B2 und führt dort die Abmeldung durch.

## Patentansprüche

1. Bussystem, bestehend aus Busstationen, wobei mindestens eine Busstation (29 bis 32) über einen ersten Bus (3) in einem Fahrzeug mit weiteren Busstationen (29 bis 32) verbunden ist, die Busstation (29 bis 32) ein Basismodul (1, 33, 35, 37) und Erweiterungsmodule (2, 34, 36, 38) aufweist, das Basismodul (1, 33, 35, 37) die Busstation (29 bis 32) an den ersten Bus (3) anschließt und mit den Erweiterungsmodulen (2, 34, 36, 38) über wenigstens einen zweiten Bus (9) verbunden ist und H die Erweiterungsmodule (2, 34, 35, 37) zur Durchführung von aufgerufenen Diensten verwendbar sind, **dadurch gekennzeichnet, dass** das Basismodul (1, 34, 35, 37) so ausgelegt ist, dass die Erweiterungsmodule (10, 16, 22, 23, 26) Ressourcen gegenseitig über den zweiten Bus (9) nutzen können, die Busstation (29 bis 32) auf die Basis- und Erweiterungsmodule der weiteren Busstationen (29 bis 32) zur Durchführung des aufgerufenen Dienstes zugreift und über den ersten Bus (3) verschiedene Dienste und Ressourcen zwischen den weiteren Busstationen (29 bis 32) ausgetauscht werden.

2. Bussystem nach Anspruch 1, **dadurch gekennzeichnet, dass** das Basismodul (1, 33, 35, 37) als Busmaster für den wenigstens einen zweiten Bus (9) ausgebildet ist.

3. Bussystem nach Anspruch 1 oder 2, **dadurch gekennzeichnet, dass** die Erweiterungsmodule (2, 34, 36, 38) als Infotainment-Komponenten ausgebildet sind.

4. Bussystem nach einem der vorhergehenden Ansprüche, **dadurch gekennzeichnet, dass** das Basismodul (1, 33, 35, 37) so ausgelegt ist, dass es einen Zugriff auf den weiteren Busstationen (29 bis 32) auf sicherheitsrelevante Erweiterungsmodule verhindert.

5. Bussystem nach einem der vorhergehenden Ansprüche, **dadurch gekennzeichnet, dass** wenigstens ein Erweiterungsmodul (2, 34, 36, 38) als Sende-/Empfangsstation (22) ausgebildet ist, über die ein Zugriff von außerhalb des Fahrzeugs auf die Busstationen (29 bis 32) möglich ist.

6. Bussystem nach einem der vorhergehenden Ansprüche, **dadurch gekennzeichnet, dass** das Basismodul (1, 33, 35, 37) so ausgelegt ist, dass es den Zugriff auf die Basismodule und Erweiterungsmodule der weiteren Busstationen (29 bis 32) in Abhängigkeit von der Busauslastung des ersten Busses (3) durchführt.

## Claims

1. Bus system, comprising bus stations, in which at least one bus station (29 to 32) is connected to further bus stations (29 to 32) via a first bus (3) in a vehicle, the bus station (29 to 32) has a basic module (1, 33, 35, 37) and extension modules (2, 34, 36, 38), the basic module (1, 33, 35, 37) connects the bus station (29 to 32) to the first bus (3) and is connected to the extension modules (2, 34, 36, 38) via at least one second bus (9), and the extension modules (2, 34, 35, 37) can be used to execute called services, **characterized in that** the basic module (1, 34, 35, 37) is designed in such a way, that the extension modules (10, 16, 22, 23, 26) can mutually use resources via the second bus (9), the bus station (29 to 32) accesses the basic and extension modules of the further bus stations (29 to 32) to execute the called service and various services and resources are exchanged via the first bus (3) between the further bus stations (29 to 32).

2. Bus system according to Claim 1, **characterized in that** the basic module (1, 33, 35, 37) is configured as a bus master for the least one second bus (9).

3. Bus system according to Claim 1 or 2, **characterized in that** the extension modules (2, 34, 36, 38) are configured as infotainment components.

4. Bus system according to one of the preceding claims, **characterized in that** the basic module (1, 33, 35, 37) is designed in such a way that it prevents access to security relevant extension modules on the further bus stations (29 to 32).

5. Bus system according to one of the preceding claims, **characterized in that** at least one extension module (2, 34, 36, 38) is configured as a sending/receiving station (22), which enables access to the bus stations (29 to 32) from outside of the vehicle.

6. Bus system according to one of the preceding claims, **characterized in that** the basic module (1, 33, 35, 37) is designed in such a way that it accesses the basic modules and extension modules of the further bus stations (29 to 32) depending on the bus load on the first bus (3).

## Revendications

1. Système de bus, constitué de stations de bus, dans lequel au moins une station de bus (29 à 32) est reliée par un premier bus (3) dans un véhicule à d'autres stations de bus (29 à 32), la station de bus (29 à 32) présente un module de base (1, 33, 35, 37) et des modules d'extension (2, 34, 36, 38), le module de base (1, 33, 35, 37) relie la station de bus (29 à 32) au premier bus (3) et est relié aux modules d'extension (2, 34, 36, 38) par au moins un deuxième bus (9), et les modules d'extension (2, 34, 35, 37) peuvent être utilisés pour mettre en oeuvre des services demandés,
**caractérisé en ce que**
le module de base (1, 34, 35, 37) est conçu de telle sorte que les modules d'extension (10, 16, 22, 23, 26) peuvent utiliser des ressources mutuellement via le deuxième bus (9), la station de bus (29 à 32) accède aux modules de base et d'extension des autres stations de bus (29 à 32) pour mettre en oeuvre le service demandé, et différents services et ressources sont échangés via le premier bus (3), entre les autres stations de bus (29) 32).

2. Système de bus selon la revendication 1,
**caractérisé en ce que**
le module de base (1, 33, 35, 37) est un bus-maître pour l'au moins un deuxième bus (9).

3. Système de bus selon la revendication 1 ou 2,
**caractérisé en ce que**
les modules d'extension (2, 34, 36, 38) sont configurés sous forme de composants d'info-loisirs.

4. Système de bus selon l'une des revendications précédentes,
**caractérisé en ce que**
le module de base (1, 33, 35, 37) est conçu pour empêcher tout accès aux autres stations de bus (29 à 32) à des modules d'extension importants en termes de sécurité.

5. Système de bus selon l'une des revendications précédentes,
**caractérisé en ce qu'**
au moins un module d'extension (2, 34, 36, 38) est une station d'émission/réception (22) permettant un accès aux stations de bus (29 à 32) depuis l'extérieur du véhicule.

6. Système de bus selon l'une des revendications précédentes,
**caractérisé en ce que**
le module de base (1, 33, 35, 37) est conçu pour réaliser l'accès aux modules de base et aux modules d'extension des autres stations de bus (29 à 32) en fonction de la charge du premier bus (3).
